Europäisches Patentamt

European Patent Office

Office européen des brevets

(19)

(11) Numéro de publication: **0 100 256**
**B1**

# (12) FASCICULE DE BREVET EUROPÉEN

(45) Date de publication du fascicule du brevet:
31.05.89

(51) Int. Cl.⁴: **F 16 G 11/12**

(21) Numéro de dépôt: **83401384.9**

(22) Date de dépôt: **05.07.83**

(54) **Tendeur pour fil métallique.**

(30) Priorité: 07.07.82 FR 8212151
16.06.83 FR 8310198

(43) Date de publication de la demande:
08.02.84 Bulletin 84/6

(45) Mention de la délivrance du brevet:
31.05.89 Bulletin 89/22

(84) Etats contractants désignés:
AT BE CH DE GB IT LI LU NL SE

(56) Documents cité:
DE-C-761 700
FR-A-915 566
FR-A-936 041
FR-A-947 259

(73) Titulaire: VAGUM Société Civile Particulière, 38
rue Franklin, F-92600 Asnieres (FR)

(72) Inventeur: Poulet, Jean- Claude, 14 rue des
Capucins, F-41200 Romorantin Lanthenay (FR)
Inventeur: Guiard- Schmid, Paul, 15 rue du Général
Leclers, F-92000 Garches (FR)
Inventeur: de Mari, Patrick, 175 bld Malesherbes,
F-75017 Paris (FR)
Inventeur: de Vaureix, Arnaud, 38 rue Franklin,
F-92000 Asnières (FR)

(74) Mandataire: Hautier, Jean- Louis, Cabinet Hautier
Office Méditerranéen de Brevets d'Invention et
de Marques 24 rue Masséna, F-06000 Nice (FR)

EP 0 100 256 B1

## Description

L'invention a pour objet un tendeur pour fil selon le préambule de la revendication 1.

Les tendeurs actuels ne peuvent être utilisés qu'à partir d'une extrémité du fil. Cette extrémité est fixée sur un cylindre en général percé d'un trou pour ladite fixation la rotation dudit cylindre par une clef permet de tendre ou de raidir le fil métallique. Le cylindre est monté sur un cadre qui comporte un moyen tel qu'un cliquet anti-retour qui empêche le cylindre de se dérouler sous la tension du fil.

Ces tendeurs, pour des fils déjà en place, sont difficiles à utiliser pour retendre un fil métallique. En effet, bien souvent la rotation du cylindre n'est plus possible à cause de la rouille. Dans ce cas, il est nécessaire de couper le fil pour le retendre par une extrémité. Si le fil supporte une charge, il n'est plus possible d'avoir assez de longueur pour l'engager dans un nouveau tendeur classique. Il est donc nécessaire de changer tout le fil. Cette opération peut être longue si le fil passe sur plusieurs piquets, et si, sur celui-ci, sont accrochées de nombreuses choses. Cela est particulièrement gênant lorsque sur le fil se trouvent des plantes grimpantes comme, par exemple, de la vigne.

L'état de la technique peut être défini par les brevets suivants FR-A-936 041, FR-A-947 259, DE-C-761 700, FR-A-915 565.

Le brevet FR-A-947 259 contenant les caractéristiques du préambule de la revendication 1 décrit un tendeur qui est constitué par un noyau cylindrique ou prismatique dont une extrémité est fendue pour recevoir le fil à tendre et dont l'autre extrémité est munie d'une tête comportant sur son pourtour des saillies ou dents disposées de façon à pouvoir s'accrocher sur le fil une fois celui-ci tendu par enroulement autour du noyau. L'instrument ainsi agencé peut être complété avantageusement par une seconde tête, semblable à la première, qui se fixe de façon amovible sur l'extrémité entaillée du noyau et qui peut aussi s'accrocher par l'une de ses saillies sur le fil tendu.

Les tendeurs décrits présentent de nombreux inconvénients. Le fil qui doit passer entre les deux tiges ou axes d'enroulement n'est pas centré au départ dès les premièrs tours d'enroulement du tendeur. Le fil peut alors être écrasé ou être coupé au moment du resserrage des deux parties entre elles, par la tension même du fil. L'enroulement du fil s'effectue au même endroit et par à-coups, ces inconvénients peuvent provoquer le cisaillement du fil sur le sommet des dents et/ou l'écartement brusque des deux parties composant le tendeur lorsque le fil s'enroule au même endroit et que la pelote d'enroulement prend une taille plus grande que la cage d'enroulement en un certain point.

L'invention tend à résoudre tous ces inconvénients. Elle permet de tendre un fil déjà en place, et qui est détendu, ou bien, de tendre un fil une fois mis en place. Le tendeur selon l'invention se met en place à un endroit quelconque sur la longueur du fil comme décrit dans la revendication 1.

Le tendeur est composé de deux parties qui s'emboîtent l'une dans l'autre. Les deux parties sont maintenues serrées entre-elles par un moyen de serrage qui, d'une part utilise la tension du fil qui passe entre chaque tige de chaque partie, et d'autre part un moyen de blocage qui empêche la rotation libre des deux parties. Chaque partie comporte une tige désaxée par rapport à l'autre. A l'extrémité de chaque tige se trouve un disque au moins un des deux disques comporte, à sa périphérie sur la face intérieure, un moyen de blocage, ledit moyen de blocage peut être des dents.

Selon une autre réalisation, chaque disque peut comporter des dents qui viennent se compléter en regard l'une de l'autre, lorsque les deux parties sont emboîtées l'une dans l'autre par leurs tiges. Les deux parties du tendeur sont emboîtées l'une dans l'autre, alors que le fil métallique passe entre les deux tiges, par la tête extérieure du boulon, qui se trouve sur au moins une des faces extérieures d'un des disques; on fait alors tourner l'ensemble du tendeur sur le fil mis en place. La tension du fil fait office de moyen de serrage et assure le maintien entre-elles des deux parties du tendeur, le fil s'enroule autour des deux tiges et les dents des disques assurent le blocage du tendeur.

Il est important que le fil soit bien placé au départ avant le premier tour d'enroulement. Des moyens de guidage du fil et d'auto-calibrage de la section du fil sont disposés à cet effet au niveau des tiges d'enroulement. Les moyens d'auto-calibrage sont des butées disposées à la base des tiges d'enroulement et qui laissent entre elles une section correspondant à la section adéquate du fil qui doit être enroulé. Les butées sont disposés à la base des tiges de manière à venir buter contre l'autre extrémité supérieure de l'autre tige qui lui fait face, et de régler ainsi automatiquement l'écartement nécessaire entre les demi-dents qui se trouvent à la périphérie de chaque partie, de manière à ce que le fil puisse passer entre-elles avec seulement une légère résistance sans provoquer d'écrasement ou de cisaillement. Une fois que les deux parties sont emboîtées l'une dans l'autre, il reste entre les tiges d'enroulement et leurs butées de guidage et de calibrage, un passage pour le fil. Ledit passage est prévu bien centré entre les deux tiges d'enroulement pour que, dès le départ, le fil s'enroule correctement et ce, automatiquement.

Un autre moyen de guidage consiste en une languette faisant office d'arête de verrouillage auto-bloquante disposée perpendiculairement à l'axe longitudinal de la tige et sur toute la longueur de la tige qui fait office de tambour d'enroulement. Ladite languette à son arête qui est vive de manière à ce que le fil, dès le départ de l'enroulement, vienne s'incruster et marquer ladite languette, assurant ainsi un bon guidage du fil et le verrouillage du serrage des deux parties entre elles puisque le fil s'incruste sur l'arête des languettes de chaque tige empêchant tout ripage dudit fil sur le tambour d'enroulement constitué par les deux tiges.

Dans une réalisation préférée de l'invention, les tiges d'enroulement sont des demi-axes qui viennent en regard l'une de l'autre lorsque les deux parties du tendeur sont emboîtées l'une dans l'autre de manière à former un tambour d'enroulement.

Les dessins ci-joints donnés à titre d'exemple indicatif et non limitatif permettront aisément de comprendre l'invention. Ils représentent un mode de réalisation préféré selon l'invention.

La figure 1 est une vue en perspective d'un tendeur composé de deux parties emboîtées l'une dans l'autre.

La figure 2 est une vue en coupe du tendeur dans lequel les tiges désaxées sont des demi-axes.

La figure 3 est une vue en perspective du tendeur mettant en évidence la manière de faire tourner le tendeur sur le fil au moyen de son écrou.

La figure 4 est une vue en coupe d'un tendeur mettant en évidence les tiges désaxées.

La figure 5 est une vue en coupe dont les deux disques ne sont pas identiques, seul un disque comporte à sa périphérie des dents.

La figure 6 est une vue du tendeur mis en place sur le fil.

La figure 7 est une vue en coupe du tendeur selon l'axe A - A représenté sur la figure 8.

La figure 8 est une vue en coupe du tendeur selon l'axe B - B représenté sur la figure 7.

La figure 9 est une vue du tendeur représenté dans la figure 1 mais où le tendeur a tourné d'un quart de tour sur le fil, de manière à mettre en évidence non plus les languettes et leurs arêtes mais les butées de calibrage et l'espace créé pour le passage du fil, le fil n'est pas représenté.

La figure 10 est une vue en perspective d'une partie du tendeur vue du côté intérieur.

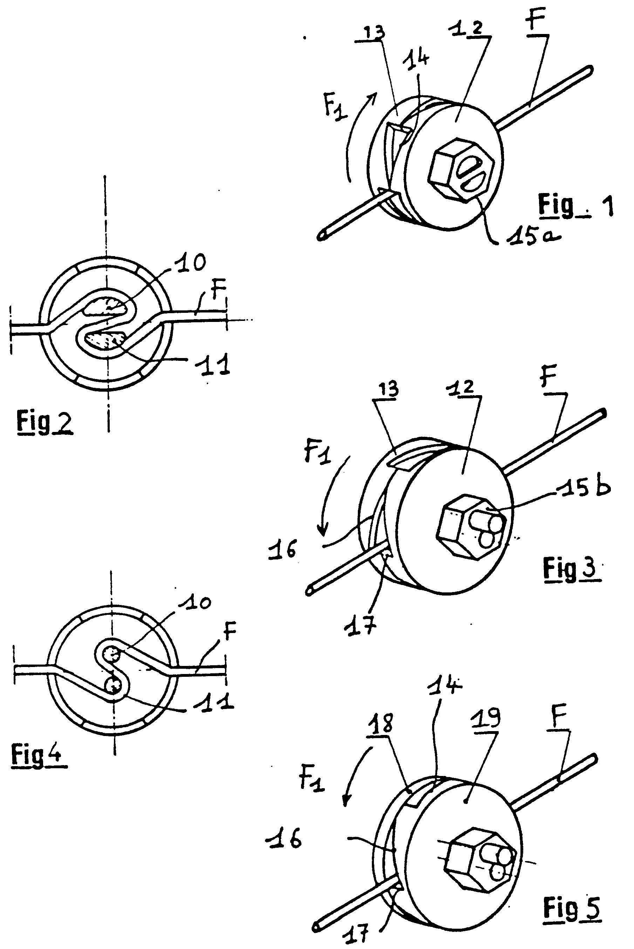

Le tendeur représenté dans les figures 1 et 2 est composé de deux parties qui s'emboîtent l'une dans l'autre, au moyen de deux tiges 10 et 11, qui sont désaxées l'une par rapport à l'autre. Chaque tige 10 ou 11 est solidaire d'un disque 12 ou 13, qui comporte à sa périphérie tournée vers l'intérieur, un moyen de blocage tel que des dents 14, qui se complètent l'une, l'autre, lorsque les deux parties sont emboîtées. Sur chaque face extérieure de chaque disque 12, 13 se trouve un écrou 15a, 15b qui permet de faire tourner dans le sens de la flèche F1, au moyen d'une clef, le tendeur sur le fil F. Le fil F s'enroule sur les tiges 10 et 11, et passe d'une dent 14 à l'autre. Chaque dent comporte une partie en plan incliné 16, et une partie faisant office de butée 17.

La représentation réalisée à la figure 5 est un tendeur dont les deux disques 18 et 19 ne sont pas identiques. Seul, un disque 19 comporte des dents 14.

Le tendeur selon l'invention est donc d'un emploi très simple il suffit de mettre en place les deux parties 20, 21 du tendeur en les emboîtant sur le fil F déjà en place une fois mis en place, on tourne ledit tendeur sur le fil métallique F selon le sens des dents 14, le fil métallique F s'enroule autour de la tige ou des tiges 10 ou 11, et à la sortie du tendeur, il se coince par une ou plusieurs dents 14.

Le tendeur est composé de deux parties 20 et 21 qui s'emboîtent l'une dans l'autre au moyen de deux tiges 10 et 11 qui sont desaxées l'une par rapport à l'autre. Chaque tige 10 et 11 est solidaire d'un disque 12, 13.

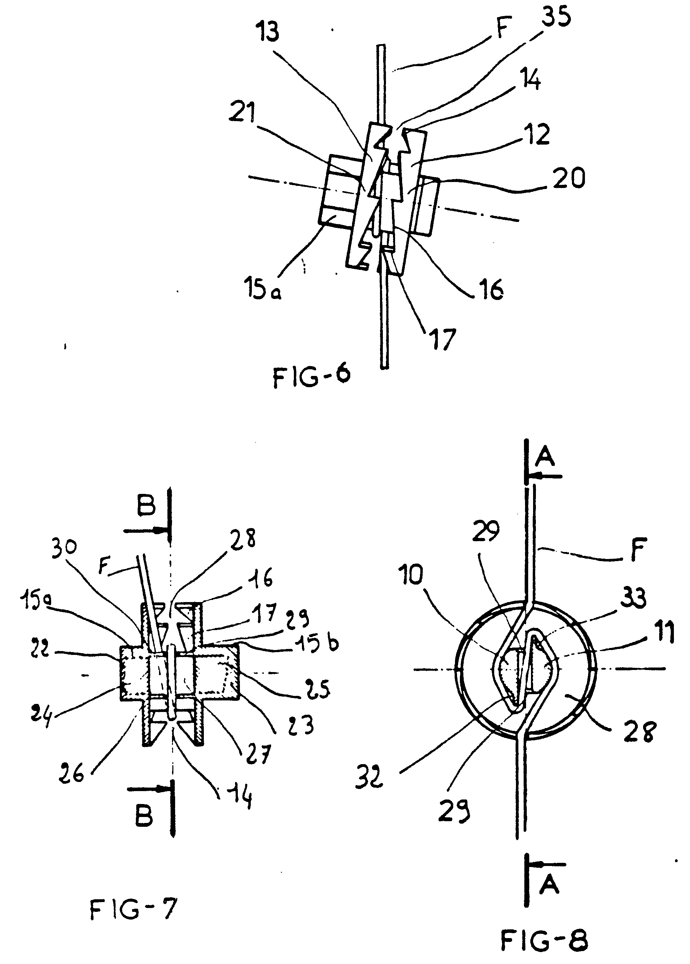

Selon un mode de réalisation préféré, ces tiges 10 et 11 sont des demi-axes. Les extrémités supérieures 22 et 23 de chaque tige 10 et 11 pénètrent dans un logement correspondant 24, 25. Ledit logement 24, 25 peut être utilisé comme moyen de serrage du tendeur et avoir une forme extérieure d'écrou 15a et/ou 15b (Fig. 7).

Les bases 26, 27 des tiges 10 et 11 se font face dans la cage d'enroulement 28 et font office de tambour d'enroulement. Ces tiges comportent, à leur base, des moyens de guidage du fil F, d'auto-calibrage de la section du fil F et de serrage des deux parties 20 et 21 entre elles.

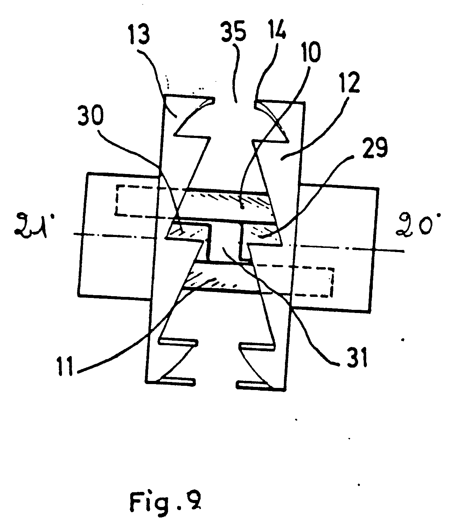

A cet effet, les tiges 10 et 11 comportent des butées 29 et 30 disposées à la base 26, 27 des tiges 10 et 11. Ces butées 29 et 30 laissent entre elles un passage 31 correspondant à la section du fil F le fil F est bien centré dès le départ. De plus, les butées 29 et 30 règlent ainsi automatiquement un espace 35 entre les dents 14 de manière à permettre le passage du fil (Fig. 9).

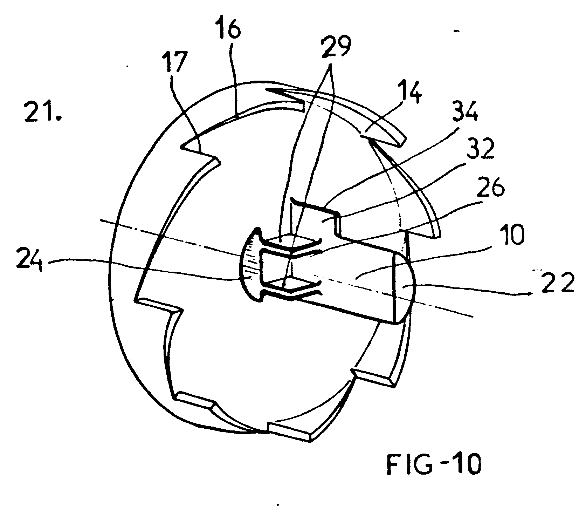

Un autre moyen de guidage du fil et de serrage des deux parties 20, 21 entre elles consiste en une languette 32, 33 (Fig. 8, 10) faisant office d'arête de verrouillage auto-bloquante disposée perpendiculairement à l'axe longitudinal et tout au long de la tige 10, 11 qui fait office de tambour d'enroulement du fil F dans la cage d'enroulement 28. Les extrémités supérieures 22 et 23 ne comportent donc pas de languettes 32, 33. Chaque languette 32, 33 comporte une arête vive 34 de manière à ce que le fil F, dès le départ de l'enroulement, vienne s'incruster et marquer ladite languette 32, 33 assurant ainsi un bon guidage du fil F et le verrouillage du serrage des deux parties 20 et 21 entre elles puisque le fil F s'incruste sur l'arête 34 des languettes 32, 33 de chaque tige 10, 11 empêchant tout ripage dudit fil F sur le tambour d'enroulement constitué par les deux tiges 10, 11.

**Revendications**

1. Tendeur pour fil métallique ou analogue dont la mise en place peut s'effectuer à un endroit quelconque sur la longueur dudit fil (F), composé de deux parties (12, 13; 18, 19; 20, 21) chaque partie est munie d'une tige (10, 11), les deux parties s'emboîtant l'une dans l'autre, et lesdites tiges formant un tambour d'enroulement du fil lorsque les deux parties sont assemblées, caractérisé par le fait que:

- les deux parties sont maintenues serrées entre elles d'une part, par un moyen de serrage ledit moyen de serrage consiste en ce que chaque tige est désaxée par rapport à l'axe de l'autre, chaque tige est immobilisée par rapport à l'autre partie, et le fil (F) passe entre les deux tiges (10, 11) et d'autre part par un moyen de blocage (14).

2. Tendeur pour fil selon la revendication 1, caractérisé par le fait que:

chaque partie est constituée par un disque (12, 13) au moins un des disques porte à sa périphérie des dents (14) comme moyen de blocage (figure 5).

3. Tendeur pour fil selon la revendication 1, caractérisé par le fait que:

- les tiges (10 et 11) sont des demi-axes, l'extrémité supérieure (22, 23) de chaque tige (10, 11) pénètre dans un logement correspondant (24, 25) situé dans l'autre partie, ledit logement peut avoir une forme extérieure d'écrou (15a et/ou 15b) (figure 7).

4. Tendeur pour fil selon l'une quelconque des revendications ou 2, caractérisé par le fait:

- qu'il comporte des moyens de guidage (29, 30) du fil (F) et d'autocalibrage de la section dudit fil (F) et des moyens de guidage du fil (F) (32, 33) des deux parties entre elles.

5. Tendeur pour fil selon la revendication 4, caractérisé par le fait que:

- les moyens de guidage du fil (F) et d'auto-calibrage de la section dudit fil (F) sont des butées (29, 30) qui sont disposées à une base (26, 27) de chaque tige (10, 11), lesdites butées laissent entre elles un passage (31) correspondant à la section du fil (F) et règlent automatiquement un espace (35) entre les dents (14), de manière à permettre le passage du fil (F).

6. Tendeur pour fil selon la revendication 5 caractérisé par le fait que:

- les butées (29, 30) sont disposées à la base des tiges (10, 11) de manière à venir buter contre l'extrémité supérieure de l'autre tige qui lui fait face.

7. Tendeur pour fil selon la revendication 4, caractérisé par le fait que:

- les moyens de guidage du fil (F) des deux parties (20, 21) entre elles sont des languettes (32, 33) faisant office d'arête de verrouillage (34) auto-bloquante, disposées perpendiculairement à l'axe longitudinal des tiges (10, 11) et sur toute la longueur des tiges (10, 11) qui font office de tambour d'enroulement.

8. Tendeur pour fil selon la revendication 7, caractérisé par le fait que:

- chaque languette (32, 33) a une arête (34) vive de manière à ce que le fil (F), dès le départ de l'enroulement, vienne s'incruster et marquer ladite languette (32, 33) assurant ainsi un bon guidage du fil (F) et le verrouillage du serrage des deux parties (20, 21) entre elle puisque le fil (F) s'incruste sur l'arête (34) de chaque languette de chaque tige empêchant ainsi tout ripage dudit fil (F) sur le tambour d'enroulement constitué par les deux tiges (10, 11).

**Patentansprüche**

1. Spanner für Metalldraht oder dergleichen, ansetzbar an jeder beliebigen Stelle längs des Drahtes (F) und bestehend aus zwei Teilen (12, 13; 18, 19; 20, 21;), von welchen jedes mit einem Schaft (10, 11) versenen ist, wobei die beiden Teile ineinandergreifen und die genannten Schäfte eine Trommel zum Aufwickeln des Drahtes bilden, wenn die beiden Teile miteinander verbunden sind,
   dadurch <u>gekennzeichnet,</u>
   daß die beiden Teile zum einen untereinander mittels eines Klemmechanismus gegeneinanderdrückbar sind, wobei der Klemmechanismus darin besteht, daß jeder Schaft in bezug auf die Achse des anderen versetzt angeordnet ist, jeder Schaft gegenüber dem anderen Teil unbeweglich ist und der Draht (F) zwischen den beiden Schäften (10, 11) hindurchläuft, und zum anderen durch eine Arretiereinrichtung (14).

2. Drahtspanner nach Anspruch 1,
   dadurch gekennzeichnet,
   daß jedes Teil aus einer Scheibe (12, 13) besteht und mindestens eine der Scheiben an ihrem Umfang Zähne (14) als Mittel zur Arretierung (Fig. 5 ) aufweist.

3. Drahtspanner nach Anspruch 1,
   dadurch gekennzeichnet,
   daß die Schäfte (10, 11) Halbachsen sind, das obere Ende (22, 23) eines jedenschaftes (10, 11) in eine entsprechende in dem anderen Teil vorgesehene Aufnahme (24, 25) eingreift und die genannte Aufnahme die Außenform einer Schraube (15a und/oder 15b) (Fig. 7) aufweist.

4. Drahtspanner nach einem der Ansprüche 1 oder 2,
   dadurch gekennzeichnet,
   daß dieser Einrichtungen (29, 30) zur Führung des Drahtes (F) und selbsttätigen Kalibrierung des Querschnitts des genannten Drahtes (F) sowie Einrichtungen (32, 33) zur Führung des Drahtes (F) der beiden Teile zwischen diesen aufweist.

5. Drahtspanner nach Anspruch 4,
   dadurch gekennzeichnet, daß
   die Einrichtungen zur Führung des Drahtes (F) und selbsttätigen Kalibrierung des Querschnitts des Drahtes (F) Anschläge (29, 30) sind, welche an einer Basis (26, 27) eines jeden Schaftes (10, 11) angeordnet sind, wobei die genannten Anschläge zwischen sich einen dem Querschnitt des Drahtes (F) entsprechenden Durchlaß (31) bilden und selbsttätig einen Abstand (35) zwischen den Zähnen (14) für den Durchlaß des Drahtes (F) einstellen.

6. Drahtspanner nach Anspruch 5,

dadurch gekennzeichnet, daß
die Anschläge (29, 30) dergestalt an der Basis der Schäfte (10, 11) angeordnet sind, daß sie an das obere Ende des gegenüberliegenden Schaftes stoßen.

7. Drahtspanner nach Anspruch 4,
dadurch gekennzeichnet, daß
die Einrichtungen zur Führung des Drahtes (F) der beiden Teile (20, 21) zwischen diesen Langetten (32, 33) sind, welche als selbsttätig blockierende Verriegelungskanten (34) dienen, die senkrecht zur Längsachse der Schäfte (10, 11) und über die gesamte Länge der Schäfte (10, 11) angeordnet sind, welche als Aufwickeltrommel dienen.

8. Drahtspanner nach Anspruch 7,
dadurch gekennzeichnet,
daß jede Langette (32, 33) eine scharfe Kante (34) dergestalt aufweist, daß der Draht (F) von Anbeginn des Aufwickelvorgangs in die genannte Languette (32, 33) einschneidet und diese anreißt, um auf diese Weise eine gute Führung des Drahtes (F) sowie die Verriegelung der Verklemmung der beiden Teile (20, 21) untereinander aufgrund dessen sicherzustellen, daß der Draht (F) in die Kante (34) einer jeden Langette eines jeden Schafts einschneidet und dadurch jedes Verrücken des Drahtes (F) auf der aus den beiden Schäften (10, 11) bestehenden Aufwickeltrommel verhindert.

## Claims

1. Tensioning device for metal wire or the like, adapted to engage at any place along the length of the wire (F) and consisting of two parts (12, 13; 18, 19; 20, 21) each of which is provided with a shaft (10, 11), with the two parts mutually engaging each other and said shafts forming a drum for winding the wire thereon when the two parts are interconnected,
characterized in that
the two parts, for one thing, are held pressed against each other with the aid of a clamping mechanism, said clamping mechanism consisting in that each shaft is offset relative to the axis of the other one, each shaft is rendered immobile relative to the other part, and in that the wire (F) passes between the two shafts (10, 11), and, for another, with the aid of a locking means (14).

2. The wire tensioning device according to claim 1,
characterized in that
each part consists of a disk (12, 13), and in that at least one of the disks has teeth (14) at its circumference to serve as a locking means (Fig. 5).

3. The wire tensioning device according to claim 1,
characterized in that
the shafts (10 and 11) are semi-shafts, the upper end (22, 23) of each shaft (10, 11) engages a corresponding seat (24, 25) provided in the other part, and in that said seat has the external shape of a screw (15a und/or 15b) (Fig. 7).

4. The wire tensioning device according to claim 1 or claim 2,
characterized in that
the same comprises means (29, 30) for the guiding of the wire (F) and the automatic calibration of the cross-section of said wire (F), and means (32, 33) for guiding said wire (F) of the two parts between the same.

5. The wire tensioning device according to claim 4,
characterized in that
the means for the guiding of the wire (F) and the automatic calibration of the cross-section of the wire (F) are abutments (29, 30) disposed at a basis (26, 27) of each shaft (10, 11), said abutments forming a passage (31) between them, corresponding to the cross-section of the wire (F), and automatically regulating the distance (35) between said teeth (14) for passing the wire (F) therethrough.

6. The wire tensioning device according to claim 5,
characterized in that
the abutments (29, 30) are disposed at the basis of the shafts (10, 11) such that they abut the upper end of the other shaft facing the same.

7. The wire tensioning device according to claim 4,
characterized in that
the means for guiding the wire (F) of the two parts (20, 21) therebetween are tabs (32, 33) serving as automatically blocking locking edges (34) which are disposed vertically of the longitudinal axis of the shafts (10, 11) and over the entire length of the shafts (10, 11) serving as a winding drum.

8. The wire tensioning device according to claim 7,
characterized in that
each tab (32, 33) comprises a sharp edge (34) such that from the very beginning of the winding operation said wire (F) cuts into said tab (32, 33) and marks the same, ensuring in this way good guidance of the wire (F) and locking of the clamping of the two parts (20, 21) between each other owing to the fact that the wire (F) cuts into the edge (34) of each tab of each shaft, thereby preventing any displacement of said wire (F) on the winding drum consisting of the two shafts (10, 11).

Fig. 1

Fig 2

Fig 3

Fig 4

Fig 5

FIG-6

FIG-7

FIG-8

Fig.9

FIG-10